Europäisches Patentamt

(19) European Patent Office

Office européen des brevets

(11) Publication number: **0 026 956**
**B1**

(12) EUROPEAN PATENT SPECIFICATION

(45) Date of publication of patent specification: **21.09.83**

(51) Int. Cl.³: **C 08 L 67/02**

(21) Application number: **80200938.1**

(22) Date of filing: **03.10.80**

(54) **Polyethylene terephthalate moulding composition having reduced flammability, and the mouldings made therefrom.**

(30) Priority: **08.10.79 NL 7907435**

(43) Date of publication of application:
**15.04.81 Bulletin 81/15**

(45) Publication of the grant of the patent:
**21.09.83 Bulletin 83/38**

(84) Designated Contracting States:
**BE DE FR GB NL**

(56) References cited:
**GB - A - 1 541 296**
**GB - A - 1 543 557**
**US - A - 3 671 487**

(73) Proprietor: **AKZO N.V.**
**Velperweg 76**
**NL-6824 BM Arnhem (NL)**

(72) Inventor: **Brink, Ted**
**Teisterbantstraat 62**
**NL-6825 CL Arnhem (NL)**
Inventor: **de Graaf, Stephanus A. G.**
**Waterweg 68**
**NL-6871 XH Renkum (NL)**

(74) Representative: **Sieders, René et al,**
**P.O. Box 314**
**NL-6800 AH Arnhem (NL)**

Courier Press, Leamington Spa, England

## 0 026 956

### Polyethylene terephthalate moulding composition having reduced flammability, and the mouldings made therefrom

The invention relates to a flame retardant polyethylene terephthalate moulding composition which contains as flame retardant additive a complex salt of oxalic acid, and to the products manufactured therefrom.

These moulding compositions are suitable to be processed into differently shaped mouldings by injection moulding, extrusion, rotation moulding and the like.

The use of particular complex salts of oxalic acid for making a polyethylene terephthalate composition flame retardant is known from the Netherlands Patent Application 7 612 884. In it it is illustrated that the use of such special oxalic acid salts has great advantages over the use of the commonly employed flame retardant substances based on halogens, phosphorus and nitrogen, the halogen compounds being the most important of these.

In addition to being satisfactorily flame retardant, it offers the advantages of the absence of considerable formation of smoke upon combustion, satisfactory processability and non-toxicity.

Although polyethylene terephthalate (PETP) moulding compositions may be rendered fire resistant and flame retardant by adding particular complex salts of ox     cids, there is a general need for these properties to be further improved without detracting      he favourable mechanical properties of the objects made from the moulding composition.

Particularly, there is need for PETP-based moulding compositio     which satisfy the most rigid standards of incombustibility. A generally accepted test method is described in Bulletin 94 of Underwriter's Laboratories (UL 94). According to this test method a material is classified UL 94—VO, which is the best rating of incombustibility, if a standard test bar extinguishes itself within on average 5 seconds after removal of the test flames and does not drip flaming particles that ignite the dry absorbent surgical cotton located below the test bar.

The same results are to be obtained in a test carried out with artifically aged material. A more detailed rendering of the test method will be given hereinafter in the description.

United States Patent Specification 3 671 487 reveals glass fibre-reinforced PETP — moulding compounds which contain a flame retardant agent and 0,9—1,9% by weight of polytetrafluoroethylene (PTFE), based on the total composition. The test method mentioned in said Patent Specification differs from the current UL 94 method, especially in that no aged material has been examined, which generally implies that the material has been less severely tested. For, it is often found that test bars which did meet the VO standard before aging, no longer meet the flammability requirement after aging. Moreover, according to said test method use was made of test bars having a thickness of 3,2 mm (1/8"). The highest rating of non-burning can only be attained with the thinner test bars of 1,6 mm (1/16") and 0,8 mm (1/32'     which are more difficult to be rendered incombustible.

Some moulding compounds do not le  u themselves to being injection moulded into test bars having a thickness of 0,8 mm (1/32"), the classification UL 94 VO for 1,6 mm (1/16") being the highest attainable rating then.

Now it is known that the presence of a fibrous material, such as glass fibres, in a polymer moulding compound containing a flame retardant agent will contribute to the effectiveness thereof in that it inhibits the dripping of a burning object. Consequently, objects made from polyester moulding compounds which do not contain fibrous material such as glass fibres can hardly, if at all, be made to meet the highest requirements of the UL 94 test for thickness values of 1,6 mm (1/16") and 0,8 mm (1/32"), unless a very high proportion of flame retardant agent, usually more than 15% by weight, is incorporated. Such high proportions of flame retardant agent, however, have a very detrimental effect on the mechanical properties, especially the impact strength, so that the resulting material will in fact not find application.

German Patent Application 2 433 966 describes a series of experiments with polybutylene terephthalate (PBTF) moulding compounds which contain 12—21% by weight of flame retardant agent consisting of a mixture of a halogen compound and antimony trioxide, and 0,5—1,0% by weight of polytetrafluoroethylene ((PTFE), to which 0,5—1,0% by weight of non-combustible potassium titanate fibres has been added. It is stated that without the addition of these fibres the 3,2 mm (1/8") test bars will drip upon being subjected to the flammability test and the material does not qualify for the UL 94 VO rating for 3,2 mm (1/8"). Not until the fibres have been added can this material be classed UL 94 VO for 3,2 mm (1/8").

Netherlands Patent Application 7 603 771 describes a series of experiments with PBTP moulding compounds which contain 18% by weight of a flame retardant agent consisting of a mixture of a halogen compound and 0,1—4,0% by weight of polytetrafluoroethylene (PTFE), of which the test bars are classed UL 94 VO for 1,6 mm (1/16"). To that end, however, an excessively large proportion of flame retardant agent is required. The experiments also show that the incorporation into the PBTP moulding compound of 30 wt.% glass fibre in the absence of PTFE but in the process of 18 wt.% flame retardant agent will also make the material meet the UL 94 VO requirement for 1,6 mm (1/16").

The present invention has for its object to provide a PETP moulding composition which contains no or very little fibrous material, and satisfies the highest requirement of flammability in accordance

2

with the UL 94 VO test for the thicknesses: 3,2 mm, 1,6 mm and 0,8 mm (1/8", 1/16" and 1/32"), without detracting from the excellent mechanical and physical properties that are imparted to objects formed from PETP moulding compositions.

The invention is characterized in that, based on the total composition, the moulding compound contains;

a) 5—15% by weight of at least one of the oxalic acid salts of the group formed by $K_3 [Al(C_2O_4)_3]$, $K_2 [Mg(C_2O_4)_2]$ and $Rb_3 [Al(C_2O_4)_3]$;

b) 0,1—0,5% by weight of polytetrafluoroethylene (PTFE) having a number average molecular weight, $\overline{Mn}$, higher than $10^5$;

c) 0—40% by weight filler, either fibrous or non-fibrous, in any case at most 10% by weight glass fibres;

d) additives usual for PETP moulding compositions.

By usual additives are to be understood here substances such as pigments, mould release agents, nucleating agents and crystallization accelerating agents, thermal stabilizers and ultraviolet stabilizers.

It has been found that the combination of a relatively small amount of the PTFE and a relatively small amount of flame retardant agent of said group imparts excellent non-burning properties to unreinforced PETP and has no detrimental effect on its favourable mechanical and physical properties. More particularly, it has been found that the presence of a small amount of PTFE not only suppresses the dripping tendency, but also enhances the effect of the flame retardant agent to such a degree that the moulding compound containing it will attain the UL 94 VO classification for a thickness of 1,6 mm (1/16") and even for a thickness of 0,8 mm (1/32") while retaining its favourable mechanical properties, such as impact strength.

Moreover, the heat distortion temperature of objects from this moulding composition is found to be at a high level. More particularly, the heat distortion temperature is higher than that of objects made from a moulding composition which contains an equally high amount of a halogen-based fire retardant agent in combustion with PTFE.

The use of a small amount of the selected complex oxalic acid salts in combination with a small amount of PTFE having a molecular weight $\overline{Mn}$ higher than $10^5$ has been found to be extraordinarily effective in rendering PETP moulding compositions non-burning up to the maximum attainable UL 94 classification, which effect is especially surprising in that it is far stronger than in the otherwise yet very much related PBTP moulding compounds. If in PBTP the same effect is to be obtained as far as incombustibility is concerned, then said combination or the traditional compounds based on halogen together with PTFE need be used in larger amounts, resulting in a deterioration of the mechanical and the physical properties.

It is preferred that the moulding composition should contain 8—12% by weight of the complex $K_3 [Al(C_2O_4)_3]$. Generally, only as little as 0,15—0,3% by weight of PTFE need be incorporated in the moulding compound. Such as PETP moulding compound meets the classification UL 94 VO for a thickness of 1,6 mm (1/16") and has a Charpy impact strength in accordance with ISO—R 179 of at least 30 kJ/m².

Preference is given to the use of $K_3 [Al(C_3O_4)_3]$ because of its strong effect and the relatively low price of this salt. For the preparation of the oxalate complexes reference is made here to the afore-mentioned Netherlands Patent Application 7 612 884.

The PTFE to be used should have a molecular weight $\overline{Mn}$ of at least $10^5$ PTFE having a lower molecular weight hardly contributes to enhancing the flame retardant properties of the oxalate complexes and to controlling the tendency to drip of a burning material.

Suitable PTFE is commercially available in the form of a powder and as a dispersion in water. Suitable powders are HOSTAFLON®TF 1400 and 1740 of Hoechst, TEFLON® No. 6 of Du Pont de Nemours and suitable dispersions are FLUON®GP 1 of ICI and HOSTAFLON®TF 5032 and 5034 of Hoechst.

Although the invention mainly envisages providing non-reinforced PETP compositions that conform to the highest standards of incombustibility, the resulting favourable properties are maintained if fibrous material is incorporated into the moulding composition. By fibrous materials are to be understood here fibres, such as glass fibres, metal fibres, synthetic fibres and carbon fibres, that are usually employed for reinforcing polymers.

Curiously enough, however, it has been found that the addition of more than 10% glass fibres has a negative influence on the fire retardant properties.

The favourable fire resistant and flame retardant properties are fully maintained, however, if into the moulding composition there are incorporated fillers, by which are to be understood finely divided substances in the form of particles which are not of a distinctly fibrous nature. The fillers envisaged here do not result in a higher tensile strength or flexural strength of the material, but they do enhance its rigidity, which is in contrast with fibrous fillers, which also enhance the tensile strength and the flexural strength. As examples of suitable fillers may be mentioned glass spheres, talc, kaolin, wollastonite, chalk, mica, powdered metal and the like, in an amount of 1—40% by weight, based on the moulding composition. It should be added that although the mineral wollastonite particles have a somewhat elongated shape, they do not have the abovementioned distinctly fibrous nature which is characteristic of, for instance, reinforcing fibres such as glass fibres.

The effect of the combination of the selected oxalic acid salts and the PTFE in PETP has been found to decrease with increasing fibre content in the moulding composition. With the moulding composition containing 30% glass fibres the effect has been found to decrease considerably. Nor is there any question of extraordinary effectiveness in PBTP moulding compositions, irrespective of whether or not they contain glass fibres in a reinforcing amount, which effect however does happen to be found with PETP moulding compounds containing no or very little fibrous material and must therefore be regarded as unpredictably favourable.

The flame retardant effect of the oxalate complexes is at least partly based on the splitting off of $CO_2$, as a result of which the supply of $O_2$ is screened off. The formation of the protective gas is clearly manifest by the high degree of foaming on the surface of a burning object of PETP containing these flame retardants. It would therefore have been obvious for the fire resistance to be promoted and the dripping of burning material to be resisted by incorporating into the moulding compound a means which would lead to a chemical bond between the polyethylene terephthalate molecules or the residues thereof when the material is bruning. A suitable substance to this end is, for instance, $Ca(OH)_2$, of which it is known that when used in combination with halogen-containing organic flame retardant agents it considerably suppresses the dripping tendency of the formed objects as a result of the increase in effective molecular weight by the coupling of the polymer chains. According to German Patent Application 2 524 195 the use of 2% by weight of $Ca(OH)_2$ suffices for a PBTP moulding compound containing a mixture of 9% by weight of decabromodiphenyl ether and 4% by weight of antimony oxide as flame retardant agent to be rendered non-dripping and be classed UL 94—SE—O, no mention being made however of the thickness of the test bars. In the UL 94—SE test no aged material is examined. The results are therefore generally somewhat more favourable than in the case of the otherwise similar UL 94—VO test.

It has now been found, however, that the use of PETP moulding compounds of $Ca(OH)_2$ in combination with the oxalates as flame retardant agents does not produce any effect in controlling the dripping of a burning material.

It is therefore surprising that PTFE, more particularly when it has a molecular weight $\overline{Mn}$ higher than $10^5$, does appear to be capable of enhancing the effect of said complex salt of oxalic acid, especially considering that PTFE is extraordinarily inert and will not form or cause the formation of a chemical bond between the PETP molecules or residues thereof.

It is also known that not only fibres, such as glass fibres, and $Ca(OH)_2$, but also other substances, for instance, colloidal $SiO_2$, sodium acetate and calcium chloride contribute to the effect of flame retardant agents in thermoplastic polymers. It has been found, however, that PTFE having a molecular weight $\overline{Mn}$ higher than $10^5$ has an unexpected and extraordinarily strong effect on the action of the oxalate complex in PETP moulding compositions, whereas colloidal $SiO_2$, $Ca(OH)_2$ and sodium acetate are hardly effective as such in combination with said oxalates in PETP. PTFE having a molecular weight $\overline{Mn}$ lower than $10^5$ practically entirely lacks this favourable effect. It has further been found that PTFE in the form of very small particles, for instance of 0,1—50 $\mu$m, is just as strongly effective as when it is used in the form of coarser particles, for instance of 300—500 $\mu$m, provided that the molecular weight $\overline{Mn}$ is chosen higher than $10^5$.

For the preparation of the PETP reference is made to the technical literature. The molecular weight of PETP suitable to be processed into moulded objects should not be too low, because in that case the material would have insufficient impact strength. It is common practice to choose a relative viscosity higher than 1,75. The relative viscosity is expressed as that of a 1%-solution of the PETP in metacresol at 25°C.

The PETP may contain relatively small amounts, but preferably not more than 5% by weight, of other thermoplastic polymers, such as polyethylene, polypropylene, polyamide, polybutylene terephthalate, and copolymers built up from ethylene terephthalate together with an ester of terephthalic acid and an other diol, such as 1,3-propanediol, 1,4-butanediol.

The moulding compounds according to the invention may be prepared by the mixing methods that are commonly employed for incorporating additives into thermoplastics. Thus, the oxalate, the PTFE, other additives, if any, and the PETP granulate may be precompounded or not before being fed to an extruder. After the additives have been mixed with the molten polymer, the resulting blend is extruded, cooled and processed into granulate again. Alternatively, the PETP granulate may be coated with the oxaolate and PTFE in the form of a powder or a dispersion and subsequently be processed or again formed into a granulate. However, it is also possible for the oxalate to be fed to the polycondensation mixture in the form of a dispersion in ethylene glycol prior to the polycondensation process.

Fillers such as talc and wollastonite may be metered into the feed port of the extruder in a usual manner at a uniform rate so that they are incorporated into the moulding compound while properly mixed.

The material is tested for flammability in accordance with the following procedure. In conformity with the UL 94 (1979) test method of Underwriter's Laboratories the material is injection moulded into test bars measuring 127 x 12,7 x 1,6 mm (1/16″) and 127 x 12,7 x 0,8 mm (1/32″). In each test the average value is determined of the results of 5 bars conditioned for 48 hours at 23 ± 2°C and 50% R.H. and that of 5 bars artificially aged by exposure for 7 days to air of 70°C.

Each bar is vertically suspended and a flame is kept against its lower end for 10 seconds. This procedure is repeated when the flaming of the test bar ceases.

For a material to be classed UL 94—VO and VI, respectively, it shall comply with the following requirements:

    a) none of the 10 test bars shall burn for more than 10 seconds (30 seconds) after the first and the second removal of the flame;

    b) the total flaming combustion shall not exceed 50 seconds (250 seconds) for the 10 flame applications for each set of 5 test bars;

    c) none of the test bars shall drip flaming particles that ignite absorbent surgical cotton located 300 mm below the test bar;

    d) none of the test bars shall display glowing combustion which persists beyond 30 seconds (60 seconds) after the second removal of the test flame. (All bracketed values for V1).

The LIO (Limiting Oxygen Index) of the moulding compounds is measured in conformity with ASTM—D 2863 with the aid of a tester made by Stanton Redcroft, Great Britain. The LOI value is defined as the oxygen concentration expressed as a percentage of a mixture of oxygen and nitrogen that will just support combustion of a vertically clamped test specimen whose top is contacted with a flame.

The viscosity of the polyester of the moulding compound is determined in accordance with the following procedure.

The relative viscosity of the PETP of the moulding compound is measured with a solution of 1 g PETP in 100 ml of a mixture of trichlorophenol and phenol, weight ratio 72:100, at 25 ± 0,05°C with the aid of a Ubbelohde capillary viscometer. The value found is converted into the value which would have been found in m-cresol, use being made of the following formula:

$$\eta \ \text{rel.m-cresol} = 0{,}795 \ \eta \ \text{rel.tcp/p} + 0{,}219$$

The relative viscosity of a PBTP moulding compound is measured in a similar way in a solution of 1 g PBTP in 100 ml m-cresol at 25 ± 0,05°C.

The determination of the molecular weight $\overline{Mn}$ of the PTFE is carried out in accordance with the method described by Suwa, Takehisa and Machi in J. Appl. Pol. Sci. *17* (1973); pp. 3253—3257.

This method is based on the relationship between the molecular weight $\overline{Mn}$ and heat of crystallization, the latter being measured by differential thermal analysis.

This relationship is as follows:

$$\overline{Mn} = 2{,}1 \ . \ 10^{10} \ \Delta H_c^{-5,16}$$

$$\Delta H_c \ \text{in cal/g}$$

The invention will be further described in the following examples.

## Example 1

In this example the flame retardant properties of a PETP moulding composition containing a complex salt of oxalic acid both without and in combination with PTFE are compared with the flame retardant properties of a PETP moulding composition containing an equal amount of a commonly employed halogen-containing flame retardant without and in combination with a corresponding amount of PTFE. As halogen-containing flame retardant there is used a mixture of 50% by weight of decabromodiphenyl ether (DBDE) and 50% by weight of antimony oxide, which mixture is known to be a particularly effective flame retardant for thermoplastic polyester.

The following materials are processed:

Granulate of PETP having a relative viscosity of 1,98.

Powdered potassium-aluminium oxalate, $K_3[Al(C_2O_4)_3]$, (K.Al.ox). For details about the preparation reference is made to Netherlands Patent Application 7 612 884.

Decabromodiphenyl ether, $C_{12}Br_{10}O$ (DBDE).

Antimony trioxide, $Sb_2O_3$.

Polytetrafluoroethylene, type Hostaflon®TF 1740 of Hoechst AG, molecular weight $\overline{Mn}$ about $3.2 \ . \ 10^6$, average particle size 40 $\mu$m (PTFE).

In a rotary mixer the PTFE powder is distributed over the surface of the PETP granulate. This granulate and the K.Al.ox are fed at a uniform rate to a twin scew extruder of the Werner und Pfleiderer type, ZDSK 53.

The cylinder temperature is set to 265°—270°C.

The melt is extruded and re-processed into granulate. Subsequently, the usual amounts of mould release agent and crystallization accelerator are added.

This granulate is injection moulded into test bars having a thickness of 0,8 mm (UL 1,32″) or 1,6 mm (1/16″) at a Stübbe injection moulding machine of the SKM 51 type.

The PETP moulding compound containing DBDE and the test bars thereof are made in the same manner.

The results of the UL 94 and ASTM D2863 test procedures are summarized in Table 1.

TABLE 1

Flammability of PETP moulding composition measured on 0,8 mm test bars containing:

| | 10% K.Al. ox. | | 20% K.Al. ox. | | 10% DBDE/ $Sb_2O_3$ | | 20% DBDE/ $Sb_2O_3$ | |
|---|---|---|---|---|---|---|---|---|
| | | 0,25% PTFE | | 0,25% PTFE | | 0,25% PTFE | | 0,25% PTFE |
| 5 UL94 test bars 0,8 mm conditioned | | | | * | | | | |
| In all, 10 flame applications | | | | | | | | |
| Combustion time sec. | 14 | 19 | 12 | 8 | 3 | 43 | 0 | 0 |
| Number of drips on surgical cotton | 24 | 2 | 29 | 0 | 28 | 14 | 23 | 0 |
| Number of ignitions | 9 | 0 | 8 | 0 | 1 | 3 | 0 | 0 |
| 5 UL94 test bars 0,8 mm aged. In all, 10 flame applications | | | | | | | | |
| Combustion time sec. | 10 | 7 | 10 | 4 | 11 | 17 | 0 | 0 |
| Number of drips on surgical cotton | 33 | 0 | 36 | 0 | 31 | 3 | 27 | 0 |
| Number of ignitions | 5 | 0 | 3 | 0 | 1 | 2 | 0 | 0 |
| UL-classification for 0,8 mm (1/32″) | | VO | | VO | | | VO | VO |
| LOI-value | 30,4 | 30,4 | 33,9 | 32,6 | 29,4 | 28,5 | 36,6 | 37,4 |

* test bars 1,6 mm (1/16″)

The above results show that a PETP moulding composition containing as little as 10% by weight of the complex potassium-aluminium oxalate and 0,25% by weight of PTFE of Mn $3,2 . 10^6$ already meets the highest UL flame retardance requirement for the thinnest test bars, which is in contrast with a PETP moulding composition into which for the oxalate an equally high amount of the known effective flame retardant combination DBDE and $Sb_2O_3$ is incorporated.

In particularly appears that the PTFE moreover enhances the flame retardant effect of the oxalate after aging of the moulding. But PTFE reduces the flame retardant effect of the DBDE-$Sb_2O_3$-combination in PETP moulding compounds.

Example 2

In this example the effect of PTFE as anti-dripping agent in a PETP moulding composition and the complex potassium-aluminium oxalate as flame retardant is compared with the effect of other anti-dripping agents known to be used for polyester.

In the manner described in Example 1 a granulate is prepared from PETP moulding compositions containing 10% by weight $K_3 Al(C_2O_4)_3$. Uniform distribution over the surface of the granulate leads to the incorporation therein respective of:

| | |
|---|---|
| 1,0 wt% sodium acetate | $(NaOOCCH_3)$ |
| 0,5 wt% calcium hydroxide | $(Ca(OH)_2)$ |
| 1,0 wt% calcium chloride | $(CaCl_2)$ |
| 1,0 wt% colloidal silicium oxide | $(SiO_2)$ |

This $SiO_2$ is added together with the oxalate.

The granulate thus treated is formed into test bars in the manner described in Example 1. The moulding composition containing PTFE is prepared in accordance with Example 1.

The test in accordance with the UL 94 procedure leads to the results summarized in Table 2.

TABLE 2

Effect of anti-dripping agents on PETP moulding composition containing 10% K.Al.ox.
UL 94 test bars 1,6 mm (1/16″).

| | 0% | 1,0% NaOOCCH₃ | 0,5% Ca(OH)₂ | 1,0% CaCl₂ | 1,0% SiO₂ | 0,25% PTFE |
|---|---|---|---|---|---|---|
| 5 test bars conditioned. In all, 10 flame applications | | | | * | * | |
| Combustion time sec. | 18 | 14 | 18 | 28 | 15 | 10 |
| Number of drips on surgical cotton | 10 | 19 | 44 | 35 | 4 | 0 |
| Number of ignitions | 2 | 4 | 2 | 9 | 1 | 0 |
| 5 test bars aged. In all, 10 flame applications | | | | | | |
| Combustion time sec. | 12 | 10 | 17 | 15 | 17 | 2 |
| Number of drips on surgical cotton | 29 | 32 | 33 | 40 | 22 | 0 |
| Number of ignitions | 4 | 5 | 1 | 9 | 4 | 0 |
| UL94-classification | — | — | — | — | — | VO |

\* test bars 0,8 mm (1/32″)

The above results show that the effect of the combination of 10% potassium-aluminium oxalate and 0,25% PTFE as fired retardant agent in PETP is far stronger than that of the combination of 10% potassium-aluminium oxalate with other agents known in themselves. Moreover, in contrast with other agents PTFE is found to considerably enhance the flame retardant effect of the oxalate.

Example 3

In this example a comparison is made between the most important mechanical properties of non-filled PETP moulding compounds which contain as flame retardant agent the oxalate combined with PTFE and those of PETP and PBTP moulding compounds which contain as flame retardant agent the mixture of decabromodiphenyl ether — antimony oxide (weight ratio 1:1) and PTFE.

7

In a rotary mixer the PETP granulate is subject to polycondensation under vacuum and at a granulate temperature of 220°C to the viscosity mer oned in Table 3.

The test bars are obtained in the manner described in Example 1.

The PBTP starting polymer has a relative viscosity of 2,10.

The results are listed in Table 3.

### TABLE 3

#### Mechanical properties

| | | % PTFE | $\eta$ rel. | ISO—R527 tensile strength MN/m² | ISO—R178 flexural strength MN/m² | flexural modulus MN/m² | ISO—R179 Charpy impact strength | Charpy Notch impact strength |
|---|---|---|---|---|---|---|---|---|
| PETP moulding compositions | | | | | | | kJ/m² | kJ/m² |
| K.Al.ox.% | 0 | | 1,93 | 42 | 110 | 3000 | no break | 3,0 |
| | 5 | | 1,75 | 70 | 87 | 3206 | 42,4 | 5,2 |
| | 10 | | 1,84 | 67 | 88 | 3203 | 30,9 | 5,2 |
| | 15 | | 1,79 | 61 | 91 | 3323 | 20,1 | 3,9 |
| | 5 | 0,25 | 1,75 | 59 | 84 | 3064 | 79,0 | 5,7 |
| | 10 | 0,25 | 1,84 | 64 | 89 | 3272 | 38,3 | 4,8 |
| DBDE/Sb$_2$O$_3$% | 10 | 0,25 | 1,86 | 59 | 88 | 3082 | 37,2 | 2,7 |
| PBTP moulding compositions | | | | | | | | |
| DBDE/Sb$_2$O$_3$% | 10 | | 1,99 | 59 | 75,7 | 2615 | no break | 3,1 |
| | 20 | | 1,96 | 59 | 80,6 | 2814 | no break | 2,9 |
| | 10 | 0,25 | 1,99 | 57 | 75,1 | 2592 | 31,6 | 3,0 |
| | 20 | 0,25 | 1,96 | 57 | 80,8 | 2808 | 21,7 | 3,1 |

The above results show that a non-filled PETP moulding composition containing as little as 10% by weight of potassium-aluminium oxalate and 0,25% by weight of PTFE not only has excellent fire retardant properties, as is shown in Table 1, but also very favourable mechanical properties.

### Example 4

This example is concerned with the influence of such fillers as talc, wollastonite and glass fibre on the fibre retardant properties of a PETP moulding composition containing as fire retardant agent the complex potassium-aluminium oxalate and PTFE.

The fillers are metered into the feed port of the extruder. For the preparation the same conditions apply as mentioned in Example 1, except that the PETP starting material has a relative viscosity of 1,65.

The test results are listed in Table 4.

8

TABLE 4

Influence of fillers on flame retardant properties of PETP moulding compositions

| | 30% glass fibres 8% K.Al.ox. 0,25% PTFE | 25% talc 8,6% K.Al.ox. 0,25% PTFE | 30% wollastonite 10% K.Al.ox. 0,25% PTFE |
|---|---|---|---|
| $\eta_{rel}$ | 1,76 | 1,65 | 1,68 |
| 5 UL94 test bars 1,6 mm (1/16″) conditioned In all, 10 flame applications Combustion time sec. | in excess of 250 | 15 | 12 |
| Number of drips on surgical cotton | 2 | 0 | 0 |
| Number of ignitions | 2 | 0 | 0 |
| 5 UL94 test bars 1,6 mm (1/16″) aged In all, 10 flame applications Combustion time sec. | in excess of 250 | 13 | 7 |
| Number of drips on surgical cotton | 5 | 0 | 0 |
| Number of ignitions | 5 | 0 | 0 |
| UL94 classification for 1,6 mm (1/16″) | — | VO | VO |

This example shows that as little as 8—10% by weight of potassium-aluminium oxalate combined with 0,25% by weight of PTFE suffices for PETP moulding compounds containing 25—30% by weight of non-fibrous fillers to meet the UL 94—VO requirements for 1,6 mm (1/16″). This classification is not attained if the filler is a glass fibre.

Example 5

In this example the influence is investigated of the molecular weight $\overline{M}n$ of the PTFE on the fire retardant of a PETP moulding composition. The moulding compositions are prepared in the manner indicated in Example 1.

The results are summarized in Table 5.

The following PTFE types are tested:

A) Polymist®F5A, manufactured by Allied Chemicals. powered, $\overline{M}n$ about $2,3.10^4$.

B) Fluon®GP1, manufactured by ICI. dispersion in water, $\overline{M}n$ about $8,5.10^6$, particle size 0,2—0,5 $\mu$m.

C) Hostaflon®TF 1740, manufactured by Hoechst. powdered, $\overline{M}n$ about $3,2.10^6$, particle size 40 $\mu$m.

Table 5

Fire retardant behaviour of PETP moulding composition containing 10 wt% K.Al.ox. and 0,25 wt% PTFE.

UL94 test bars 1,6 mm (1/16″)

|  | no PTFE | A | B | C |
|---|---|---|---|---|
| 5 test bars, conditioned In all, 10 flame applications | | | | |
| Combustion time sec. | 18 | 16 | 10 | 10 |
| Number of drips on surgical cotton | 10 | 8 | 0 | 0 |
| Number of ignitions | 2 | 1 | 0 | 0 |
| 5 test bars, aged In all, 10 flame applications | | | | |
| Combustion time sec. | 12 | 11 | 2 | 2 |
| Number of drips on surgical cotton | 29 | 25 | 0 | 0 |
| Number of ignitions | 4 | 3 | 0 | 0 |
| UL—94 classification | — | — | VO | VO |

The above results show that the afore-mentioned influence on fire retardant properties is only found with PTFE types having a molecular weight ($\overline{\text{Mn}}$) higher than $10^5$.

**Claims**

1. A flame retardant polyethylene terephthalate moulding composition which contains as flame retardant additive a complex salt of oxalic acid, characterized in that based on the total composition the moulding composition contains:
   a) 5—15% by weight of at least one of the oxalic acid salts of the group formed by $K_3\,[Al(C_2O_4)_3]$, $K_2\,[Mg(C_2O_4)_2]$ and $Rb_3\,[Al(C_2O_4)_3]$,
   b) 0.1—0.5% by weight of polytetrafluoroethylene having a number average molecular weight, $\overline{\text{Mn}}$, higher than $10^5$,
   c) 0—40% by weight filler, either fibrous or non-fibrous, in any case at most 10% by weight glass fibres,
   d) additives usual for polyethylene terephthalate moulding compositions.
2. A moulding composition according to claim 1, characterized in that it contains 8—12% by weight of the complex $K_3\,[Al(C_2O_4)_3]$.
3. A moulding composition according to the claims 1—2, characterized in that it contains 0.15—0.3% by weight of polytetrafluoroethylene.
4. Moulded articles made from the moulding composition of the claims 1—3.

**Patentansprüche**

1. Eine flammhemmende Polyäthylenterephthalat-Formmassenzusammensetzung, die als flammhemmende Zusatz ein Komplexsalz der Oxalsäure enthält, dadurch gekennzeichnet, daß sie — bezogen auf die Gesamtzusammensetzung der Formmassenzusammensetzung —

(a) 5—15 Gewichtsprozent mindestens eines von Oxalsäuresalzen der durch $K_3$ $[Al(C_2O_4)_3]$, $K_2$ $[Mg(C_2O_4)_2]$ und $Rb_3$ $[Al(C_2O_4)_3]$ gebildeten Gruppe,

(b) 0,1—0,5 Gewichtsprozent Polytetrafluoräthylen mit einem durchschnittlichen Molekulargewicht $\overline{M}n$ höher als $10^5$,

(c) 0—40 Gewichtsprozent eines entweder faserförmigen oder nicht-faserförmigen Füllstoffes, in jedem Fall höchstens 10 Gewichtsprozent Glasfasern,

(d) für Polyäthylenterephthalat-Formmassenzusammensetzungen übliche Zusätze.

2. Eine Formmassenzusammensetzung nach Anspruch 1, dadurch gekennzeichnet, daß sie 8—12 Gewichtsprozent des Komplexes $K_3$ $[Al(C_2O_4)_3]$ enthält.

3. Eine Formmassenzusammensetzung nach den Ansprüchen 1 bis 2, dadurch gekennzeichnet, daß sie 0,15—0,3 Gewichtsprozent Polytetrafluoräthylen enthält.

4. Formteile, die aus Formmassenzusammensetzungen nach den Ansprüchen 1 bis 3 hergestellt sind.

**Revendications**

1. Composition de moulage ignifuge en téréphtlate de polyéthylène contenant comme additif ignifuge un sel complexe d'acide oxalique, caractérisée en ce que par rapport à la composition totale la composition de moulage contient:

a) de 5 à 15% en poids d'au moins un des sels d'acide oxalique de groupe formé par $K_3$ $[Al(C_2O_4)_3]$, $K_2$ $[Mg(C_2O_4)_2]$ et $Rb_3$ $[Al(C_2O_4)_3]$,

b) de 0,1 à 0,5% en poids de polytétrafluoréthylène ayant un poids moléculaire moyen en nombre, $\overline{M}n$, supérieur à $10^5$,

c) de 0 à 40% en poids d'agent de remplissage, fibreux ou non fibreux, en tout cas aui plus 10% en poids de fibres de verre,

d) les additifs habituels pour les compositions de moulage en téréphtalate de polyéthylène.

2. Composition de moulage selon la revendication 1, caractérisée en ce qu'elle contient de 8 à 12% en poids du complexe $K_3$ $[Al(C_2O_4)_3]$.

3. Composition de moulage selon les revendications 1—2, caractérisée en ce qu'elle contient de 0,15 à 0,3% en poids de polytétrafluoréthylène.

4. Articles moulés fabriqués à partir de la composition de moulage des revendications 1—3.